(19) Europäisches Patentamt
European Patent Office
Office européen des brevets

(11) Veröffentlichungsnummer: **0 264 927 B1**

(12) **EUROPÄISCHE PATENTSCHRIFT**

(45) Veröffentlichungstag der Patentschrift: **30.09.92**

(51) Int. Cl.[5]: **G02F 1/13**, G02F 1/133, H01J 29/89, C09K 19/38

(21) Anmeldenummer: **87115406.8**

(22) Anmeldetag: **21.10.87**

(54) **Bildwiedergabeanordnung mit einer Bildröhre und Verfahren zur Herstellung.**

(30) Priorität: **23.10.86 DE 3636059**

(43) Veröffentlichungstag der Anmeldung:
**27.04.88 Patentblatt 88/17**

(45) Bekanntmachung des Hinweises auf die Patenterteilung:
**30.09.92 Patentblatt 92/40**

(84) Benannte Vertragsstaaten:
**DE FR GB IT NL**

(56) Entgegenhaltungen:
**EP-A- 0 136 696**
**EP-A- 0 228 703**
**JP-A-61 137 133**
**US-A- 4 048 358**

**MOLECULAR CRYSTALS AND LIOUID CRYSTALS, Band 137, Nrs. 1-4, Juli 1986, Seiten 349-364, Gordon and Breach Science Publishers S.A., New York, US; J.-C. DUBOIS et al.: "Liquid crystalline side chain polymers derived from poly-acrylate, poly-methyacrylate and poly-alpha-chloroacrylate"**

**POLYMER BULLETIN, Band 12, Nr. 4, Oktober 1984, Seiten 299-301, Springer-Verlag, Heidelberg, DE; V.P. SHIBAEV et al.: "Liquid crystal polymers"**

(73) Patentinhaber: **Nokia (Deutschland) GmbH**
**Östliche Karl-Friedrich-Strasse 132**
**W-7530 Pforzheim(DE)**

(72) Erfinder: **Zondler, Rolf, Dr.**
**Aiterhofener Strasse 42**
**W-8440 Straubing-Ittling(DE)**

EP 0 264 927 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Bildröhrenanordnung zum Wiedergeben polarisierter Bilder sowie ein Verfahren zum Herstellen einer solchen Anordnung.

Eine Bildröhrenanordnung mit einer Bildröhre mit einer Frontscheibe, einem Polarisator und einer Flüssigkristallzelle ist in EP-A-0 136 696 offenbart. Es wird dort allerdings nicht genau beschrieben, wie die Anordnung hergestellt wird; es ist jedoch anzunehmen, daß der Polarisator und die Flüssigkristallzelle am Rahmen der Bildröhre befestigt werden oder daß die Bildröhre, der Polarisator und die Flüssigkristallzelle durch ein gemeinsames Gehäuse gehalten werden.

Aus US-A-4,048,358 ist eine Bildröhrenanordnung mit einer Bildröhre und einer folienförmigen Flüssigkristallzelle bekannt. Die Flüssigkristallzelle ist beidseitig mit durchsichtigen Elektrodenflächen versehen. Auch diese Veröffentlichung beschreibt nicht, wie die Flüssigkristallzelle und die Bildröhre in fester gegenseitiger Beziehung gehalten werden, jedoch zeigt eine persektivische Darstellung deutlich, daß die folienförmige Flüssigkristallzelle in der Ebene eines Gehäuses mit eben ausgebildeter Frontfläche liegt. Die folienförmige Flüssigkristallzelle scheint also unmittelbar durch die Frontwand des Gehäuses gehalten zu sein. Dahinter muß die Bildröhre mit ihrer gewölbten Frontscheibe angeordnet sein. Die genannte US-Veröffentlichung gibt an, daß folienförmige Flüssigkristallzellen auch in gekrümmter Ausführung eingesetzt werden können. Ein gekrümmtes Display ist dargestellt.

Bei den beschriebenen Bildröhrenanordnungen besteht, wie bei allen optischen Systemen, das Problem, die Einzelteile der Anordnung möglichst gut justiert zueinander und möglichst eng beieinander anzuordnen, damit sich ein möglichst großer Betrachtungswinkel mit gleichmäßigem Bildeindruck ergibt.

Die erfindungsgemäße Bildröhrenanordnung zeichnet sich dadurch aus, daß ein Polarisator und eine folienförmige Flüssigkristallzelle direkt auf der Frontscheibe der Bildröhre angeordnet sind, und zwar vorzugsweise durch Verkleben mit der Frontscheibe. Durch das unmittelbare Verbinden von Polarisationsfolie und Flüssigkristallfolie mit der Frontscheibe ist eine nicht mehr zu unterbietende Kompaktheit der Gesamtanordnung gegeben. Paralaxeeffekte sind vollständig ausgeschlossen, so daß der brauchbare Betrachtungswinkel nur noch von den Eigenschaften der Flüssigkristallzelle abhängt.

Das erfindungsgemäße Verfahren zeichnet sich dadurch aus, daß eine Polarisationsfolie und eine Flüssigkristallfolie durch Laminieren miteinander verbunden werden und daß das Laminat auf die Frontscheibe einer Bildröhre aufgeklebt wird.

Die Flüssigkristallfolie besteht vorteilhafterweise aus einem Polymer, vorzugsweise einem Polymer mit ferroelektrischem Flüssigkristallmaterial. Ein ferroelektrisches Flüssigkristall-Polymermaterial ist für sich aus EP-A-0 228 703 bekannt. Ferroelektrische Flüssigkristalle schalten besonders schnell.

Nachstehend werden Beispiele für ferroelektrische Flüssigkristallverbindungen angegeben.

Aufpfropfbare ferroelektrische Flüssigkristallverbindungen

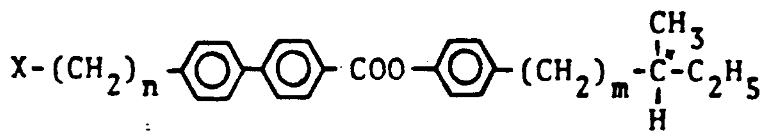

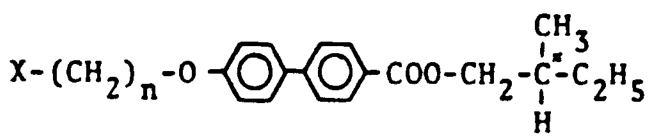

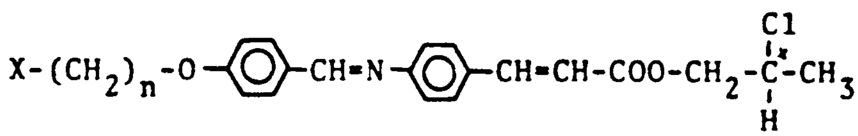

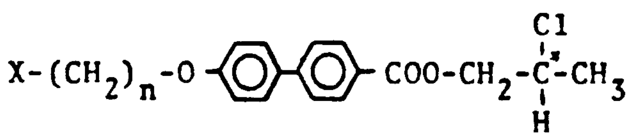

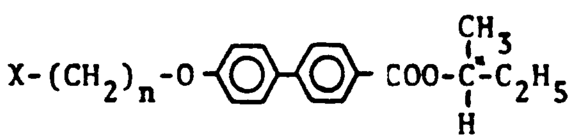

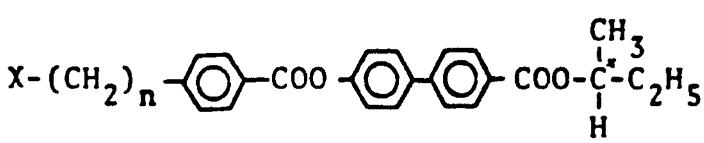

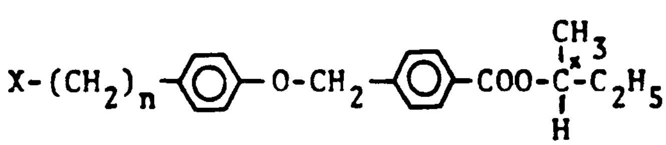

wobei X eine zur Kupplung an Polymerketten, z.B. Organopolysiloxane, geeignete Gruppe ist, z.B. OH, $NH_2$, COOH.

Bei den Beispielen für aufpfropfbare ferroelektrische Flüssigkristallverbindungen sind die C-Atome mit einem x bezeichnet, welche die chiralen Eigenschaften der Flüssigkristalle bedingen.

Polymer-Flüssigkristallfolien, bei denen die Schaltgeschwindigkeit durch ferroelektrische Flüssigkristallverbindungen wesentlich erhöht wurde, bieten wesentliche Vorteile auch für andere Anwendungen, beispielsweise für Flüssigkristallanzeigen, die zur Wiedergabe beweglicher Bilder geeignet sind. Der Gedanke, eine Flüssigkristallfolie mit ferroelektrischem Flüssigkristallmaterial aufzubauen, hat daher eine selbständige erfinderische Bedeutung, die weit über die Anwendung beim Gegenstand des vorliegenden Anspruchs 1 hinausgeht.

Solche Polymer-Flüssigkristallfolien mit ferroelektrischem Flüssigkristallmaterial können nicht allein durch Aufpfropfen geeigneter Flüssigkristallverbindungen auf geeignete Polymerketten erhalten werden, sondern auch durch Polymerisieren geeigneter Monomerer. Nachfolgend sind einige Beispiele von polymerisierbaren Monomeren auf der Basis von Acrylsäure- und Methacrylsäureestern angegeben.

Polymerisierbare Monomere auf Basis Acrylsäure- und Methacrylsäurester.

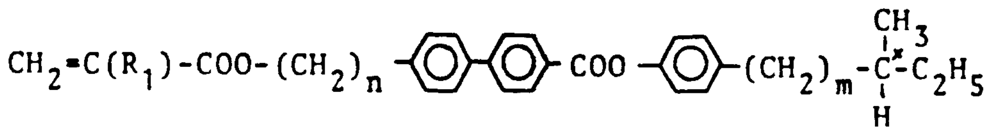

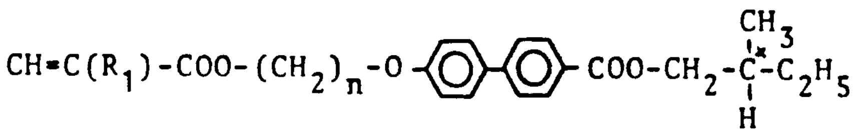

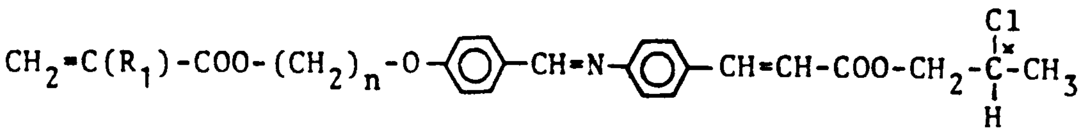

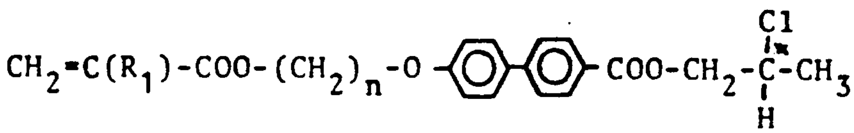

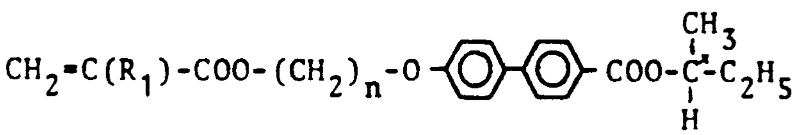

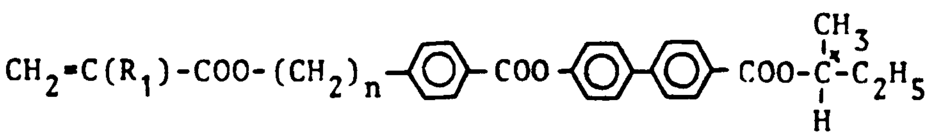

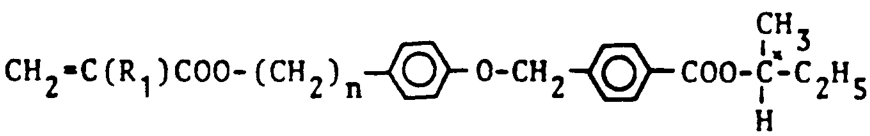

Bei den bekannten Flüssigkristallzellen mit einem Flüssigkristall zwischen zwei Glasplatten sind die durchsichtigen Elektroden zur Umschaltung der Flüssigkristallzelle auf der inneren Seite der Glasplatten angeordnet. Im Gegensatz hierzu sind bei Polymer-Flüssigkristallfolien die durchsichtigen Elektrodenschichten auf der Außenseite der Folie angeordnet, so daß sie leicht kontaktiert werden können. Besonders einfach ist es, bei der vorliegenden Anordnung mindestens teilweise eine Klebschicht aus einem leitenden Kleber zu verwenden, der gleichzeitig zur Kontaktierung der durchsichtigen Elektrodenschichten dient. Der leitende Kleber, der in der Regel nicht durchsichtig ist, kann an verdeckten Stellen außerhalb des Bildbereichs des Bildschirms angeordnet sein.

Ein besonders einfaches Verfahren zur Herstellung einer Anordnung gemäß der Erfindung besteht darin, daß die Polarisationsfolie und die Polymer-Flüssigkristallfolie zunächst durch Laminieren d.h. durch Einwirkung von Druck und/oder Wärme miteinander verbunden werden, so daß das Laminat als einziges Teil auf die Frontscheibe der Bildröhre aufgeklebt werden kann.

Hierbei kann beispielsweise die Polymer-Flüssigkristallfolie beidseitig zunächst mit einer durchsichtigen, elektrisch leitfähigen Schicht versehen werden, wonach die Polarisationsfolie auf eine Seite der Polymer-Flüssigkristallfolie auflaminiert wird und das Laminat dann mit einem durchsichtigen Kleber auf die Frontscheibe der Bildröhre aufgeklebt wird.

Eine andere Möglichkeit besteht darin, die Polarisationsfolie auf einer Seite mit einer durchsichtigen,

elektrisch leitfähigen Schicht zu versehen und ebenfalls die Polymer-Flüssigkristallfolie einseitig mit einer durchsichtigen elektrisch leitfähigen Schicht zu versehen. Die beiden Folien werden danach derart aufeinander laminiert, daß die beschichtete Seite der Polarisationsfolie auf der unbeschichteten Seite der Polymer-Flüssigkristallfolie zu liegen kommt. Auf diese Weise sind gleichfalls leitende Schichten zu beiden Seiten der Polymer-Flüssigkristallfolie angeordnet, ohne daß es einer doppelseitigen Beschichtung, wie bei den zuvor beschriebenen Verfahren, bedarf.

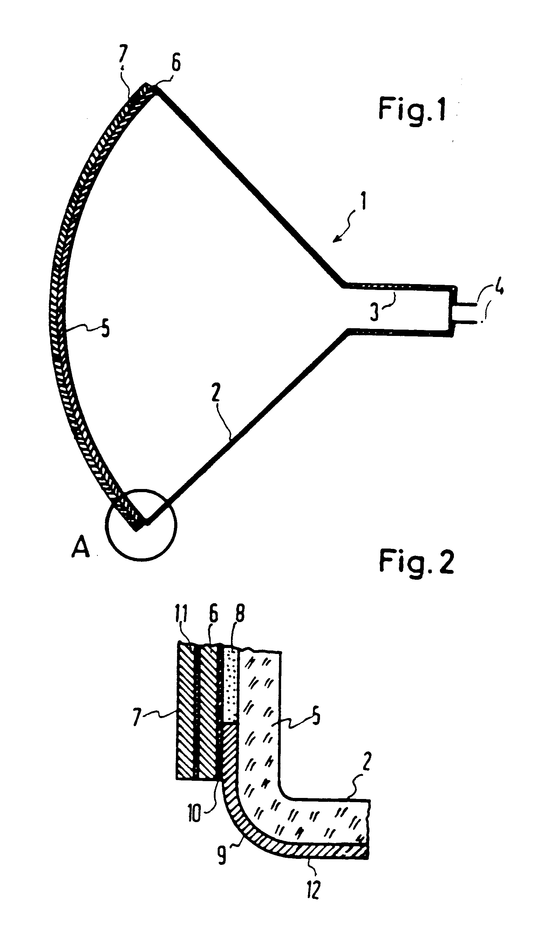

Ein Ausführungsbeispiel der Erfindung ist in den Figuren 1 und 2 dargestellt.

Fig. 1 zeigt schematisch im Schnitt eine Bildröhre mit einer Folienanordnung gemäß der Erfindung auf der Frontscheibe; in

Fig. 2 ist zur Verdeutlichung der Schichtenanordnung der in Fig. 1 mit A bezeichnete Teil vergrößert dargestellt.

Die Bildröhre 1 besteht aus einem Kolben 2, der auf der einen Seite in den Hals 3 übergeht, auf der der Sockel 4 angeordnet ist. und der andererseits in die Frontscheibe 5 übergeht, mit der gemäß der Erfindung eine Polymer-Flüssigkristallfolie 6 und eine darauf angeordnete Polarisationsfolie 7 verbunden sind. Die beiden Folien 6 und 7 können untereinander und mit der Frontscheibe 5 der Bildröhre 1 durch einen durchsichtigen Kleber verbunden sein, es kann aber auch, wie oben beschrieben, zuerst ein Laminat aus den Folien 6 und 7 gebildet werden, das als Einheit auf die Frontscheibe 5 der Bildröhre 1 mit einem durchsichtigen Kleber aufgeklebt wird.

Aus Fig. 2 kann entnommen werden, daß beiderseits der Polymer-Flüssigkristallfolie 6 durchsichtige Leiterschichten 10 und 11 angeordnet sind, und daß auf der Leiterschicht 11 die Polarisationsfolie 7 angeordnet ist. Die Anordnung der Schichten 6, 7, 10 und 11, die vorzugsweise ein Laminat bilden, ist mittels der durchsichtigen Klebschicht 8 auf der Frontscheibe 5 der Bildröhre aufgeklebt. Außerhalb des Bildbereichs besteht ein Teil des Klebers aus einem Leitkleber 9, der über eine Zuleitung 12 an die entsprechende Ansteuerschaltung angeschlossen ist.

## Patentansprüche

1. Bildröhrenanordnung zum Wiedergeben polarisierter Bilder
   - mit einer Bildröhre (1) mit einer Frontscheibe (5),
   - mit einem Polarisator (7) und
   - mit einer folienförmigen Flüssigkristallzelle (6),

   **dadurch gekennzeichnet,**
   daß die folienförmige und beidseitig mit durchsichtigen Elektrodenflächen versehene Flüssigkristallzelle (6) direkt auf der Frontscheibe (5) angeordnet ist und daß die der Frontscheibe (5) abgewandte Fläche der Flüssigkristallzelle (6) mit dem Polarisator (7) versehen ist.

2. Anordnung nach Anspruch 1, dadurch gekennzeichnet, daß die Flüssigkristallzelle (6) und der Polarisator (7) mittels eines durchsichtigen Klebers (8) untereinander und mit der Frontscheibe (5) der Bildröhre (1) verbunden sind.

3. Anordnung nach Anspruch 2, dadurch gekennzeichnet, daß der Kleber (8) einen Brechungsindex hat, der zwischen dem der beiden angrenzenden Schichten liegt.

4. Anordnung nach einem der Ansprüche 1 bis 3, dadurch gekennzeichnet, daß die Flüssigkristallzelle (6) aus einer Polymer-Flüssigkristallfolie besteht.

5. Anordnung nach Anspruch 4, dadurch gekennzeichnet, daß die Polymer-Flüssigkristallfolie ein an Polymermaterial gebundenes ferroelektrisches Flüssigkristallmaterial enthält.

6. Anordnung nach einem der Ansprüche 2 bis 5, dadurch gekennzeichnet, daß die Klebschicht (8) mindestens teilweise aus einem elektrisch leitenden Kleber (9) besteht.

7. Verfahren zum Herstellen einer Bildwiedergabeanordnung
   - mit einer Bildröhre (1)
   - mit einer Frontscheibe (5),
   - mit einem Polarisator (7), und
   - mit einer folienförmigen und beidseitig mit durchsichtigen Elektrodenflächen versehenen Flüssigkristallzelle (6),

**dadurch gekennzeichnet,**
daß eine Polarisationsfolie (7) und die folienförmige Flüssigkristallzelle (6) durch Laminieren miteinander verbunden werden und daß das Laminat mit der Fläche der Flüssigkristallzelle (6), die nicht mit der Polarisationsfolie (7) versehen ist, auf der Frontscheibe (5) der Bildröhre (1) aufgeklebt wird.

**8.** Verfahren nach Anspruch 7, dadurch gekennzeichnet, daß die Polymer-Flüssigkristallfolie (6) beidseitig mit einer durchsichtigen elektrisch leitfähigen Schicht versehen wird, daß dann die Polarisationsfolie (7) auf eine Seite der Polymer-Flüssigkristallfolie (6) auflaminiert wird und daß das Laminat mit einem durchsichtigen Kleber (8) auf die Frontscheibe (5) der Bildröhre (1) aufgeklebt wird.

**9.** Verfahren nach Anspruch 7, dadurch gekennzeichnet, daß die Polarisationsfolie (7) auf einer Seite mit einer durchsichtigen elektrisch leitfähigen Schicht versehen wird, daß die Polymer-Flüssigkristallfolie (6) ebenfalls auf einer Seite mit einer durchsichtigen elektrisch leitfähigen Schicht versehen wird, daß die Polarisationsfolie(7) mit der Polymer-Flüssigkristallfolie (6) durch Laminieren verbunden wird und zwar so, daß die beschichtete Seite der Polarisationsfolie (7) auf der unbeschichteten Seite der Polymer-Flüssigkristallfolie (6) zu liegen kommt und daß das so erhaltene Laminat mit einem durchsichtigen Kleber auf die Frontscheibe (5) der Bildröhre (1) aufgeklebt wird.

## Claims

**1.** Picture tube arrangement for the reproduction of polarized images
- with a picture tube (1) with a front panel (5);
- with a polarizer (7); and
- with a film-like liquid crystal cell (6),

**characterized in that**
the film-like liquid crystal cell (6), provided on both sides with transparent electrode surfaces, is arranged directly on the front panel (5); and that the surface of the liquid crystal cell (6) facing away from the front panel (5) is provided with the polarizer (7).

**2.** Arrangement according to Claim 1, characterized in that the liquid crystal cell (6) and the polarizer (7) are joined to one another and to the front panel (5) of the picture tube (1) by means of a transparent adhesive (8).

**3.** Arrangement according to Claim 2, characterized in that the adhesive (8) has a refractive index that lies between that of the two adjacent layers.

**4.** Arrangement according to one of Claims 1 to 3, characterized in that the liquid crystal cell (6) consists of a polymer/liquid crystal film.

**5.** Arrangement according to Claim 4, characterized in that the polymer/liquid crystal film contains a ferroelectric liquid crystal material linked to a polymer material.

**6.** Arrangement according to one of Claims 2 to 5, characterized in that the adhesive layer (8) consists at least partially of an electrically conductive adhesive (9).

**7.** Process for the production of an image reproduction arrangement
- with a picture tube (1);
- with a front panel (5);
- with a polarizer (7); and
- with a film-like liquid crystal cell (6) provided on both sides with transparent electrode surfaces,

**characterized in that**
a polarization film (7) and the film-like liquid crystal cell (6) are joined to one another by laminating; and that the laminate is adhesively bonded onto the front panel (5) of the picture tube (1) at the surface of the liquid crystal cell (6) that is not provided with the polarization film (7).

**8.** Process according to Claim 7, characterized in that the polymer/liquid crystal film (6) is provided on both sides with a transparent electrically conductive coating; that the polarization film (7) is then laminated onto one side of the polymer/liquid crystal film (6); and that the laminate is adhesively

bonded onto the front panel (5) of the picture tube (1) with a transparent adhesive (8).

**9.** Process according to Claim 7, characterized in that the polarization film (7) is provided on one side with a transparent electrically conductive coating; that the polymer/liquid crystal film (6) is also provided on one side with a transparent electrically conductive coating; that the polarization film (7) is joined to the polymer/liquid crystal film (6) by lamination, in such a way that the coated side of the polarization film (7) comes into contact with the uncoated side of the polymer/liquid crystal film (6); and that the resulting laminate is adhesively bonded onto the front panel (5) of the picture tube (1) with a transparent adhesive.

**Revendications**

**1.** Système de tubes d'image pour la reproduction d'images polarisées
- avec un tube d'image (1) avec un disque frontal (5),
- avec un polarisateur (7) et
- une cellule de cristal liquide (6) en forme de feuille,

**caractérisé en ce que**
la cellule de cristal liquide en forme de feuille (6) et munie des deux côtés de surfaces d'électrode transparentes est disposée directement sur le disque frontal (5) et que la surface de la cellule de cristal liquide (6) opposée au disque frontal est munie du polarisateur (7).

**2.** Système selon la revendication 1, caractérisé en ce que la cellule de cristal liquide (6) et le polarisateur (7) sont reliés ensemble et avec le disque frontal (5) du tube d'image (1) moyennant une colle transparente.

**3.** Système selon la revendication 2, caractérisé en ce que la colle (8) a un indice de réfraction se situant entre celui des deux couches limitrophes.

**4.** Système selon l'une des revendications 1 à 3, caractérisé en ce que la cellule de cristal liquide (6) consiste en une feuille de cristal liquide de polymère.

**5.** Système selon la revendication 4, caractérisé en ce que la feuille de cristal liquide polymère contient un matériau de cristal liquide ferro-électrique lié à un matériau polymère.

**6.** Système selon l'une des revendications 2 à 5, caractérisé en ce que la couche de colle (8) consiste au moins partiellement en une colle électroconductrice (9).

**7.** Procédé pour la fabrication d'un système de reproduction d'image
- avec un tube d'image (1)
- avec un disque frontal (5)
- avec un polarisateur (7) et
- une cellule de cristal liquide (6) en forme de feuille et munie des deux côtés d'une surface d'électrode transparente,

**caractérisé en ce que**
une feuille de polarisation (7) et la cellule de cristal liquide (6) en forme de feuille sont reliées ensemble par lamination et que le laminé est collé avec la surface de cellule à cristal liquide (6) non munie de la feuille de polarisation (7) sur le disque frontal (5) du tube image (1).

**8.** Procédé selon la revendication 7, caractérisé en ce que la feuille de cristal liquide polymère (6) est munie des deux côtés d'une couche électroconductrice transparente, qu'ensuite la feuille de polarisation (7) est laminée sur un côté de la feuille de cristal liquide polymère (6) et que le laminé est collé avec une colle transparente (8) sur le disque frontal (5) du tube image (1).

**9.** Procédé selon la revendication 7, caractérisé en ce que la feuille de cristal liquide polymère (6) est munie des deux côtés d'une couche électroconductrice transparente, que la feuille de cristal liquide polymère (6) est également munie d'un côté d'une couche électroconductible transparente, que la feuille de polarisation (7) est reliée par laminage à la feuille de cristal liquide polymère (6) et ce de telle façon que le côté de la feuille de polarisation (7) revêtu se trouve sur le côté non revêtu de la feuille de

cristal liquide polymère (6) et que le laminé ainsi obtenu est collé sur le disque frontal (5) du tube image (1) avec de la colle transparente.

Fig.1

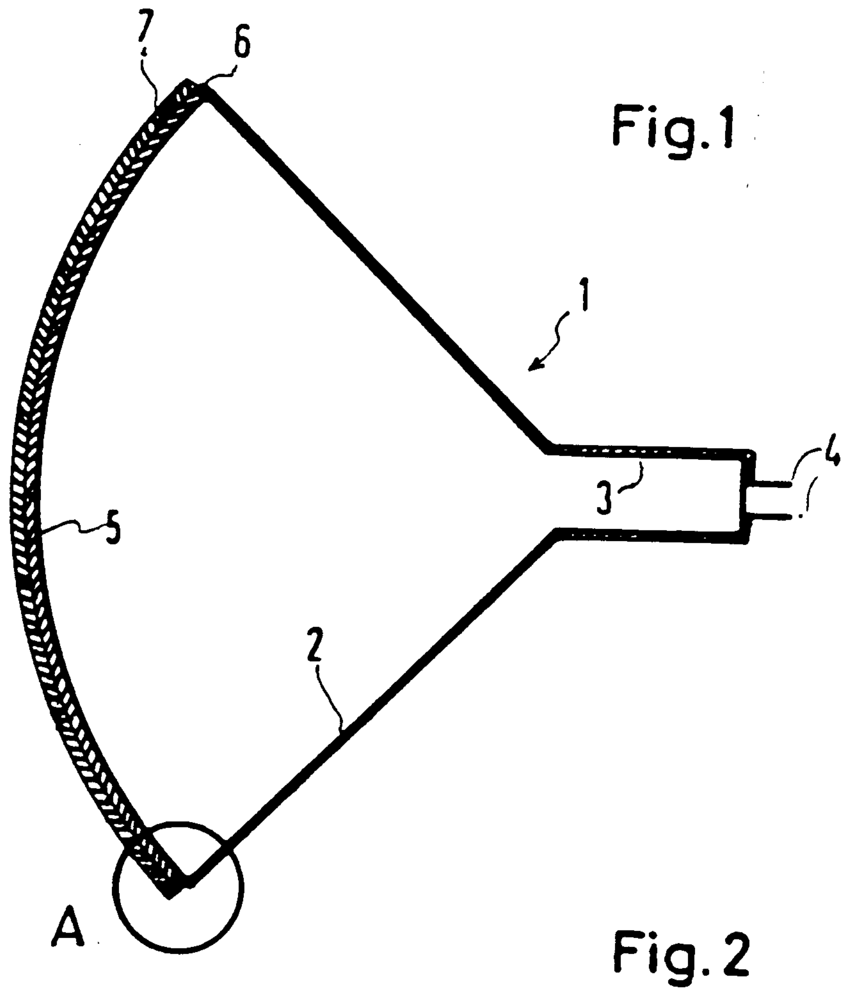


Fig.2